Europäisches Patentamt

European Patent Office

Office européen des brevets

(11) Veröffentlichungsnummer: **0 479 026 A1**

# (12) EUROPÄISCHE PATENTANMELDUNG

(21) Anmeldenummer: **91115677.6**

(51) Int. Cl.⁵: **G05B 19/18**

(22) Anmeldetag: **16.09.91**

(30) Priorität: **02.10.90 DE 4031079**

(43) Veröffentlichungstag der Anmeldung:
**08.04.92 Patentblatt 92/15**

(84) Benannte Vertragsstaaten:
**DE FR GB IT**

(71) Anmelder: **Ex-Cell-O GmbH**
**Salacher Strasse 93**
**W-7332 Eislingen/Fils(DE)**

(72) Erfinder: **Grüner, Günther**

Geislinger Strasse 42
**W-7347 Bad Überkingen(DE)**
Erfinder: **Philipp, Werner**
**Stuifenweg 4**
**W-7067 Plüderhausen(DE)**
Erfinder: **Pikisch, Hans**
**Auf der Ebene 45**
**W-7332 Eislingen(DE)**

(74) Vertreter: **Hoeger, Stellrecht & Partner**
**Uhlandstrasse 14 c**
**W-7000 Stuttgart 1(DE)**

(54) **Maschine zum Unrundbearbeiten von Werkstücken.**

(57) Um eine Maschine zum Unrundbearbeiten von Werkstücken umfassend ein Maschinengestell (10), eine am Maschinengestell gehaltene Werkstückspindel (12) zur Aufnahme eines Werkstücks mit einem C-Achsen-Sensor (54), einen parallel zur Werkstückspindel verschiebbaren Z-Schlitten (22) mit einem Z-Achsen-Sensor (30), einen auf dem Z-Schlitten angeordneten X-Achsen-Antrieb (35), mit welchem ein Werkzeug (36) auf das Werkstück (14) zustellbar ist, einem X-Achsen-Sensor (56) zur Erfassung der Lage des Werkzeugs, und eine Steuereinrichtung derart zu verbessern, daß diese schnell und zuverlässig arbeitet, wird vorgeschlagen, daß die Steuereinrichtung eine numerische Maschinensteuerung (199) aufweist, welche die Werkstückspindel (12) und den Z-Achsen-Antrieb (28) ansteuert, sowie eine numerische X-Achsen-Steuerung (197) umfaßt, daß die X-Achsen-Steuerung (197) unabhängig von der Maschinensteuerung (199) den X-Achsen-Antrieb entsprechend der vorgegebenen unrunden Form ansteuert und daß nach bestimmten Zeitintervallen eine Koordination zwischen der Maschinensteuerung (199) und der X-Achsen-Steuerung (197) erfolgt.

Fig. 1

Die Erfindung betrifft eine Maschine zum Unrundbearbeiten von Werkstücken, umfassend ein Maschinengestell, eine am Maschinengestell gehaltene Werkstückspindel zur Aufnahme eines Werkstücks, einen C-Achsen-Sensor zur Erfassung der Drehstellungen der Werkstückspindel, einen auf dem Maschinengestell angeordneten, in Z-Richtung parallel zur Werkstückspindel verschiebbaren Z-Schlitten mit einem Z-Achsen-Antrieb, einen Z-Achsen-Sensor zur Erfassung der Lage des Z-Schlittens, einen auf dem Z-Schlitten angeordneten X-Achsen-Antrieb, mit welchem ein Werkzeug in X-Richtung auf das Werkstück zustellbar ist, einen X-Achsen-Sensor zur Erfassung der Lage des Werkzeugs und eine Steuereinrichtung zur Ansteuerung des X-Achsen-Antriebs in Abhängigkeit von den von dem C-Achsen-Sensor, dem Z-Achsen-Sensor und dem X-Achsen-Sensor gemessenen Werten so, daß eine der Steuereinrichtung vorgegebene unrunde Form des Werkstücks bei der Bearbeitung entsteht.

Eine derartige Maschine ist beispielsweise aus der EP-A-0 201 230 bekannt. In dieser Druckschrift ist eine Steuereinrichtung offenbart, welche eine numerische Steuerung umfaßt, in welche eine analoge closed-loop-Steuerung zur Ansteuerung des C-Achsen-Antriebs integriert ist, wobei die numerische Steuerung der analogen closed-loop-Steuerung die Folge der die unrunde Form des Werkstücks repräsentierenden Daten in digitaler Weise vorgibt, so daß die analoge closed-loop-Steuerung lediglich noch eine Verknüpfung der Werte des X-Achsen-Sensors, des C-Achsen-Sensors und des Z-Achsen-Sensors vornimmt.

Eine derartige "gemischte" Steuerung bringt Probleme und ist hinsichtlich ihrer Genauigkeit und der Anpaßbarkeit ihrer Steuercharakteristik an einen X-Achsen-Antrieb Beschränkungen unterworfen.

Der Erfindung liegt daher die Aufgabe zugrunde, eine Maschine der gattungsgemäßen Art derart zu verbessern, daß diese schnell und zuverlässig arbeitet und eine optimale Anpassung an den gewählten X-Achsenantrieb zuläßt.

Diese Aufgabe wird bei einer Maschine der eingangs beschriebenen Art erfindungsgemäß dadurch gelöst, daß die Steuerung eine numerische Maschinensteuerung, welche die Werkstückspindel und den Z-Achsen-Antrieb ansteuert, sowie eine numerische X-Achsen-Steuerung umfaßt, daß die X-Achsen-Steuerung unabhängig von der Maschinensteuerung den X-Achsen-Antrieb entsprechend der vorgegebenen unrunden Form ansteuert und daß nach bestimmten Zeitintervallen eine Koordination zwischen der Maschinensteuerung und der X-Achsen-Steuerung erfolgt.

Die der Erfindung zugrundeliegende Idee ist darin zu sehen, daß die Steuereinrichtung aus zwei grundsätzlich unabhängig voneinander arbeitenden numerischen Steuerungen, nämlich der Maschinensteuerung und der X-Achsen-Steuerung, aufgebaut ist und daß die beiden Steuerungen zu bestimmten Zeitintervallen miteinander koordiniert werden. Die X-Achsen-Steuerung arbeitet dabei völlig unabhängig von der Maschinensteuerung und steuert dabei den X-Achsen-Antrieb entsprechend der vorgegebenen unrunden Form des Werkstücks, wobei die X-Achsen-Steuerung selbständig Werte aus dem X-Achsen-Sensor, dem C-Achsen-Sensor und dem Z-Achsen-Sensor einliest und die erforderlichen Berechnungsvorgänge für die Ansteuerung des X-Achsen-Antriebs vornimmt.

Die Maschinensteuerung steuert ihrerseits die Werkstückspindel und den Z-Achsen-Antrieb und alle übrigen Arbeitsvorgänge in der erfindungsgemäßen Maschine, so daß lediglich nach bestimmten Zeitintervallen eine Koordination zwischen der Maschinensteuerung und der X-Achsen-Steuerung erforderlich ist.

Damit wird die Möglichkeit geschaffen, daß die X-Achsen-Steuerung eine sehr schnelle und speziell auf die schnelle Ansteuerung des X-Achsen-Antriebs zugeschnittene Steuerung sein kann, deren Rechenzeiten nicht durch andere periphere Steuerungsvorgänge beeinträchtigt werden, während andererseits die Maschinensteuerung alle peripheren Steuervorgänge durchführt, die alle wesentlich langsamer als die Ansteuerung des X-Achsen-Antriebs laufen können, so daß die Maschinensteuerung selbst eine konventionelle numerische Maschinensteuerung sein kann.

Mit diesem Steuerungskonzept wird ferner der Vorteil erreicht, daß man aufgrund der numerischen X-Achsen-Steuerung in einfacher Weise die Möglichkeit hat, die Steuercharakteristik dieser X-Achsen-Steuerung dem gewählten X-Achsen-Antrieb durch geeignete Parameterwahl anzupassen, was bei einer analogen Ansteuerung des X-Achsen-Antriebs, wie sie aus dem eingangs genannten Stand der Technik bekannt ist, nicht möglich ist. Insbesondere sind mit den erfindungsgemäßen Lösungen in einfacher Weise komplexe Steuerstrategien möglich.

Um einen möglichst schnellen Zugriff auf die von dem X-Achsen-Sensor, dem C-Achsen-Sensor und dem Z-Achsen-Sensor gemessenen Werte zu erhalten, ist vorteilhafterweise vorgesehen, daß die X-Achsen-Steuerung die von dem C-Achsen-Sensor und dem X-Achsen-Sensor gemessenen Werte - und bei in Z-Richtung variierender Kontur auch die von Z-Achsensensor gemessenen Werte - für die Ansteuerung des X-Achsen-Antriebs ermittelt.

Ein besonders zweckmäßiges Ausführungsbeispiel sieht dabei zwei Z-Achsen-Sensoren und zwei C-Achsen-Sensoren vor, wobei jeweils ein Z-Achsen-Sensor und ein C-Achsen Sensor für die Maschinensteuerung und ein Z-Achsen-Sensor und ein C-Achsen-Sensor für die X-Achsen-Steuerung vorgesehen sind. Damit läßt sich in einfacher Weise eine Entkopplung der Steuerungen erreichen und außerdem können die Sensoren hinsichtlich ihrer Auflösung an die Anforderungen der einzelnen Steuerungen angepaßt werden.

Da im vorliegenden Fall eine besonders genaue Lageregelung des Werkzeugs erfolgen soll, ist vorteilhafterweise vorgesehen, daß die X-Achsen-Steuerung die X-Lage-Werte des Werkzeugs überprüft und entsprechend dem Ergebnis den X-Achsen-Antrieb über eine Stellgröße ansteuert. Dieses Stellsignal ist beispielsweise eine Stellkraft, welche dann entsprechend der jeweiligen Charakteristik des gewählten X-Achsen-Antriebs in Stellgrößen für diesen umgesetzt wird.

Grundsätzlich ist es möglich, die X-Achsen-Steuerung so auszubilden, daß sie ständig nacheinander einen Programmzyklus abarbeitet und an bestimmten Stellen des Programmzyklus ein Stellsignal ermittelt sowie den X-Achsen-Antrieb entsprechend ansteuert. Besonders vorteilhaft ist es jedoch, wenn der X-Achsen-Steuerung ein Taktgenerator integriert ist, welcher nach Ablauf eines festlegbaren Zeitintervalls zu diskreten Zeitpunkten eine Berechnungsroutine startet, im Laufe welcher das Stellsignal für den X-Achsen-Antrieb ermittelt wird. Durch das Vorsehen eines Taktgenerators ist aufgrund der Zeitintervalle von vornherein vorgegeben, zu welchen Zeitpunkten eine Berechnungsroutine in der X-Achsen-Steuerung gestartet und das Stellsignal für den X-Achsen-Antrieb ermittelt wird, wobei es sich bei diesen Zeitintervallen um konstante diskrete und vorher im Hinblick auf die geforderte Genauigkeit der X-Achsen-Steuerung festgelegte Zeitintervalle handelt.

Die Berechnungsroutine ist zweckmäßigerweise so ausgewählt, daß in der Berechnungsroutine das Stellsignal ermittelt wird, welches von dieser Berechnungsroutine zu dem dieser Berechnungsroutine zugeordneten Zeitpunkt ausgegeben wird.

In besonders einfacher Weise arbeitet die X-Achsen-Steuerung dann, wenn in der Berechnungsroutine nacheinander vorgegebene Operationen ausgeführt und nach Beendigung der Operationen auf einen erneuten Start der Berechnungsroutine durch den Taktgenerator gewartet wird. Damit werden komplizierte Programmstrukturen der Berechnungsroutine vermieden, die die Rechenzeiten schwer vorhersagbar machen und somit zu Ungenauigkeiten dadurch führen, daß das Stellsignal nach unterschiedlich langen Zeitintervallen ab dem Start der Berechnungsroutine ausgegeben wird.

Eine besonders vorteilhafte Variante der X-Achsen-Steuerung sieht vor, daß nach dem Einlesen der Lage-Ist-Werte die Berechnung des Stell-Signals auf der Basis von Lage-Ist-Werten und von Lage-Soll-Werten erfolgt. Besonders vorteilhaft ist es dabei, wenn das Stellsignal auf der Basis zukünftiger, vorausberechneter Lage-Ist-Werte und zukünftiger, vorausberechneter Lage-Soll-Werte ermittelt wird. Diese Art der Berechnung des Stell-Signals wird als prädiktive Regelung bezeichnet und gibt die Möglichkeit, einen Schleppfehler des jeweiligen X-Achsen-Antriebs in einfacher und präziser Weise zu korrigieren, so daß das Werkzeug stets genau in der Stellung steht, in welcher es entsprechend dem jeweiligen C- und Z-Lage-Ist-Wert zum jeweiligen Zeitpunkt stehen soll.

Vorzugsweise ist die X-Achsen-Steuerung dabei so aufgebaut, daß dieser ein Konturwerte-Speicher zugeordnet ist, in welchem Parameter für die unrunde Form des Werkstücks abgespeichert sind.

Vorteilhafterweise werden bei einer derartigen X-Achsen-Steuerung mit den C- und Z-Lage-Ist-Werten und den Parametern in Konturwertespeichern die X-Lage-Soll-Werte ermittelt.

Hinsichtlich der Speicherung der Parameter für die unrunde Form im Konturwertespeicher bestehen die unterschiedlichsten Möglichkeiten. Als besonders vorteilhaft im Rahmen der erfindungsgemäßen Lösung hat es sich erwiesen, wenn die Parameter für die unrunde Form als Radienstützstellen für aufeinanderfolgende Scheiben des Werkstücks im Konturwertespeicher abgelegt sind.

Um dabei Speicherplatz zu sparen und mit möglichst wenig Radienstützstellen auszukommen, ist ferner vorgesehen, daß die X-Achsen-Steuerung zwischen den Radienstützstellen einer Scheibe interpoliert. Um ferner weiterhin auch die Zahl der aufeinanderfolgenden Scheiben möglichst gering zu halten, ist ferner vorgesehen, daß die X-Achsen-Steuerung zwischen den Radienstützstellen aufeinanderfolgender Scheiben interpoliert.

Eine Interpolation zwischen den Stützstellen und den Scheiben schafft die Möglichkeit, die Information über die zu speichernde Kontur in möglichst speicherplatzsparender Weise abzulegen und trotzdem eine hohe Genauigkeit zu erreichen. So läßt sich ein zylindrischer Abschnitt durch zwei Scheiben am Anfang und Ende desselben genau definieren, während eine komplizierte Kontur durch Erhöhung der Zahl der Stützstellen pro Scheibe und Verringerung der Abstände der Scheiben mit der erforderlichen Genauigkeit erfassbar ist.

Aus diesem Grund ist erfindungsgemäß vorgesehen, daß die Zahl der Stützstellen pro Scheibe und der Abstand der Scheiben voneinander über eine Kontur des gesamten Werkstücks variiert.

Besonders vorteilhaft ist es ferner, wenn die X-Achsen-Steuerung bezüglich der Kontur frei programmierbar ist, wobei die Kontur entweder als Stützstellenfeld oder als Funktion eingebbar ist.

Ferner ist zweckmäßigerweise vorgesehen, daß die X-Achsen-Steuerung mit einem CAD Anschluß versehen ist.

Hinsichtlich der Berechnung der zukünftigen X-Lage-Soll-Werte wurden bislang keine näheren Ausführungen gemacht. So ist bei einem bevorzugten Ausführungsbeispiel vorgesehen, daß die X-Achsen-Steuerung den zukünftigen X-Lage-Soll-Wert durch Berechnung eines zukünftigen C-Lage-Ist-Wertes und vorteilhafterweise zusätzlich eines zukünftigen Z-Lage-Ist-Wertes ermittelt. Diese Berechnung geht davon aus, daß sich die gegenwärtigen C-Lage-Ist-Werte und Z-Lage-Ist-Werte entsprechend der Entwicklung derselben in der Vergangenheit ändern, das heißt, daß die Änderung der C-Lage-Ist-Werte und gegebenenfalls der Z-Lage-Ist-Werte über eine kurze Zeitdauer konstant ist, so daß auf der Basis der vorausgegangenen C-Lage-Ist-Werte und gegebenenfalls Z-Lage-Ist-Werte die zukünftigen C-Lage-Ist-Werte und gegebenenfalls Z-Lage-Ist-Werte mit hinreichender Genauigkeit errechenbar sind, und folglich auch die auf dieser Basis berechneten zukünftigen X-Lage-Soll-Werte eine hinreichende Genauigkeit aufweisen.

Somit läßt sich bevorzugterweise die X-Achsen-Steuerung mit den zukünftigen C-Lage-Ist-Werten und gegebenenfalls den zukünftigen Z-Lage-Ist-Werten die Interpolation zwischen den Radienstützstellen der Scheiben und/oder aufeinanderfolgender Scheiben durchführen.

Eine besonders bevorzugte Ausführungsform der erfindungsgemäßen Lösung, welche sich durch hohe Genauigkeit auszeichnet, sieht vor, daß die X-Steuerung eine vorbestimmte Anzahl zukünftiger X-Lage-Soll-Werte ermittelt und zur Berechnung eines Stellsignals zu einem bestimmten Zeitpunkt heranzieht.

Dies sieht im einfachsten Fall so aus, daß in der Berechnungsroutine zu einem bestimmten Zeitpunkt die X-Lage-Soll-Werte für zukünftige Zeitpunkte auf der Basis der für diese Zeitpunkte errechneten C-Lage-Ist-Werte und Z-Lage-Ist-Werte ermittelt werden.

Ein bevorzugtes Ausführungsbeispiel, welches es ermöglicht, die Rechenzeit zwischen dem Einlesen der Lage-Ist-Werte und dem Auslesen der Stellgröße möglichst kurz zu halten, sieht vor, daß von der X-Achsen-Steuerung die Berechnung der zukünftigen X-Lage-Soll-Werte vor dem Einlesen der zu einem bestimmten Zeitpunkt gehörigen Lage-Ist-Werten erfolgt.

Besonders vorteilhaft ist es dabei, wenn die zukünftigen X-Lage-Soll-Werte für eine Berechnungsroutine in der vorausgehenden Berechnungsroutine errechnet werden, so daß in der jeweiligen Berechnungsroutine sofort nach dem Start derselben beispielsweise mit einem Einlesen der diesem Zeitpunkt entsprechenden Lage-Ist-Werte begonnen werden kann und somit Ungenauigkeiten vermieden werden.

Im einfachsten Fall ist bei der Berechnung der zukünftigen X-Lage-Soll-Werte für eine Berechnungsroutine vorgesehen, daß diese für eine vorgebbare Zahl nächstfolgender Berechnungsroutinen ermittelt werden. Das heißt, daß in einer ausgewählten Berechnungsroutine zu einem bestimmten Zeitpunkt die X-Lage-Soll-Werte zur Ermittlung des Stellsignals Verwendung finden, die für eine vorgebbare Zahl von nächstfolgenden Berechnungsroutinen zu den diesen entsprechenden Zeitpunkten ermittelt werden.Es besteht dabei die Möglichkeit, die zukünftigen X-Lage-Soll-Werte in jeder Berechnungsroutine erneut zu berechnen oder aber die einmal berechneten zukünftigen X-Lage-Soll-Werte für die nachfolgenden Berechnungsroutinen insoweit weiter zu verwenden als sie auch für diese Berechnungsroutinen zukünftige X-Lage-Soll-Werte darstellen. Dies erfolgt im einfachsten Fall durch Umspeichern der zukünftigen X-Lage-Soll-Werte in einem Schieberegister. Mit dieser Vorgehensweise läßt sich in vorteilhafterweise Rechenzeit einsparen.

Hinsichtlich der Art der Ermittlung der zukünftigen Lage-Ist-Werte, welche in erfindungsgemäßer Weise für die Berechnung des Stellsignals herangezogen werden, wurden bislang ebenfalls keine näheren Ausführungen gemacht.

So sieht ein bevorzugtes Ausführungsbeispiel vor, daß die nach einer Berechnungsroutine verwendeten zukünftigen vorausberechneten Lage-Ist-Werte auf der Basis des in dieser Berechnungsroutine ermittelten X-Lage-Ist-Werts berechnet werden.

Ferner ist bei einem bevorzugten Ausführungsbeispiel der erfindungsgemäßen Lösung vorgesehen, daß in die Vorausberechnung der zukünftigen X-Lage-Ist-Werte in einer bestimmten Berechnungsroutine das Stell-Signal zum Zeitpunkt der vorausgegangenen Berechnungsroutine eingeht.

Vorzugsweise wird zur Ermittlung des Stellsignals so vorgegangen, daß die in einer Berechnungsroutine verwendeten vorausberechneten X-Lage-Ist-Werte die X-Lage-Ist-Werte für eine bestimmte Anzahl nachfolgender Berechnungsroutinen sind und daß mit dieser bestimmten Anzahl zukünftiger X-Lage-Ist-Werte das Stellsignal in dieser Berechnungsroutine ermittelt wird.

Vorzugsweise erfolgt die Berechnung des Stellsignals so, daß in dieses die Differenz der zukünftigen vorausberechneten X-Lage-Soll-Werte und der zukünftigen vorausberechneten X-Lage-Ist-Werte, versehen mit Wichtungskoeffizienten, sowie das Stellsignal der vorausgegangenen Berechnungsroutine eingeht.

Im Rahmen der Erläuterung der bislang beschriebenen Ausführungsbeispiele wurde nicht darauf eingegangen, wie die Korrelation zwischen der X-Achsen-Steuerung und der Maschinensteuerung erfolgen soll. Diese Korrelation kann beispielsweise dadurch durchgeführt werden, daß die Maschinensteuerung ständig die Stellsignale der X-Achsen-Steuerung überwacht. Besonders einfach ist eine Korrelation zwischen der X-Achsen-Steuerung und der Maschinensteuerung jedoch dadurch, daß die X-Achsen-Steuerung von der Maschinensteuerung ein Freigabesignal abfragt. Danach arbeitet die X-Achsen-Steuerung im störungsfreien Betrieb selbständig weiter.

Vorzugsweise ist dabei vorgesehen, daß außerhalb des Zeitbereichs zwischen dem Einlesen der Sensorwerte zur Berechnung einer der Stellgrößen und der Ausgabe der jeweiligen Stellgröße das Freigabesignal abgefragt wird.

Bei einer X-Achsen-Steuerung, welche eine der vorstehend beschriebenen Berechnungsroutinen durchführt, hat es sich als besonders vorteilhaft erwiesen, wenn das Freigabesignal für die X-Achsen-Steuerung in der vorausgehenden Berechnungsroutine abgefragt wird, wobei vorzugsweise ein Abfragen des Freigabesignals nach Ausgabe des Stellsignals erfolgt. Eine derartige Lösung hat den großen Vorteil, daß die für das Erhalten des Freigabesignals benötigte Zeit sich nicht negativ auf die Präzision der Steuerung auswirkt, da die Abfrage des Freigabesignals in einem Abschnitt der Berechnungsroutine erfolgt, zu dem bereits das Stellsignal ausgegeben ist, so daß die Zeit zwischen dem Einlesen der Sensorwerte und der Ausgabe des Stellsignals möglichst kurz gehalten werden kann.

Bei allen bestehenden Ausführungsbeispielen wurde nicht im einzelnen darauf eingegangen, welcher X-Achsen-Antrieb Verwendung finden soll. So sieht ein bevorzugtes Ausführungsbeispiel vor, daß der X-Achsen-Antrieb einen elektrischen Linearmotor umfaßt.

Vorzugsweise ist dabei der elektrische Linearmotor ein Drehstrom-Asynchron-Motor, welcher hohe Stellkräfte und somit eine schnelle Bewegbarkeit des Werkzeugs mit hoher Präzision erlaubt.

Besonders gut kommen die Vorteile eines Drehstrom-Asynchron-Linearmotors dann zur Wirkung, wenn der elektrische Linearmotor durch flußorientierte Stromführung geregelt ist. Dabei werden von der X-Achsen-Steuerung aufgrund der Stellgröße die Phasenstromsollwerte berechnet.

Zweckmäßigerweise erfolgt die Regelung der Phasenströme für die flußorientierte Stromführung durch einen dem X-Achsen-Antrieb zugeordneten Pulsumrichter.

Eine andere alternative Ausführungsform für den X-Achsen-Antrieb sieht vor, daß der X-Achsen-Antrieb einen hydraulischen Stellzylinder umfaßt, wobei vorzugsweise der hydraulische Stellzylinder durch ein hydraulisches Servo-Ventil angesteuert ist.Bei diesem Ausführungsbeispiel ist beispielsweise die Stellgröße der Ventilschieberweg und daraus folgend im wesentlichen die Geschwindigkeit des X-Achsen-Antriebs.

In diesem Fall wird vorzugsweise das vom X-Achsen-Rechner errechnete Stellsignal in ein Steuersignal für das hydraulische Servo-Ventil umgesetzt und nicht in Strom-Soll-Werte für den Umrichter wie bei einem Drehstrom-Asynchron-Linearmotor.

Weitere Merkmale und Vorteile der erfindungsgemäßen Maschine sind Gegenstand der nachfolgenden Beschreibung sowie der zeichnerischen Darstellung einiger Ausführungsbeispiele. In der Zeichnung zeigen:

Fig. 1 eine Seitenansicht eines Ausführungsbeispiels einer erfindungsgemäßen Maschine;

Fig. 2 eine Draufsicht längs Linie 2-2 auf das erste Ausführungsbeispiel;

Fig. 3 einen Schnitt längs Linie 3-3 in Fig. 2;

Fig. 4 einen horizontalen Schnitt durch den X-Achsen-Antrieb des ersten Ausführungsbeispiels;

Fig. 5 einen vertikalen Schnitt durch den X-Achsen-Antrieb des ersten Ausführungsbeispiels;

Fig. 6 einen Schnitt längs Linie 6-6 in Fig. 5;

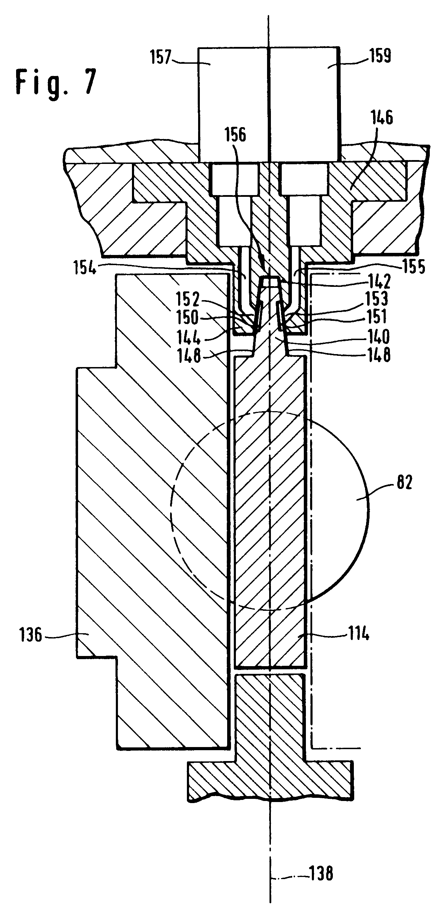

Fig. 7 einen Schnitt längs Linie 7-7 in Fig. 5;

Fig. 8 eine schematische Darstellung der Steuereinrichtung des ersten Ausführungsbeispiels;

Fig. 9 eine schematische Darstellung der Art der Abspeicherung einer Kontur beim ersten Ausführungsbeispiel;

Fig.10 einen Schnitt längs Linie 10-10 in Fig. 9;

Fig.11 einen Ablauf einer Berechnungsroutine beim ersten Ausführungsbeispiel und

Fig.12 eine schematische Darstellung einer Steuereinrichtung eines zweiten Ausführungsbeispiels.

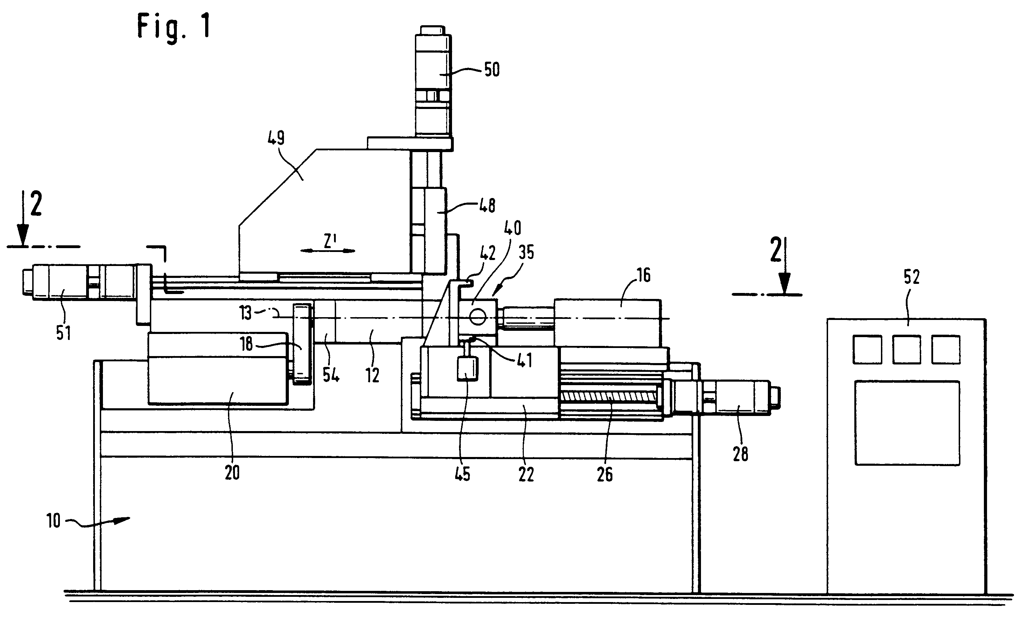

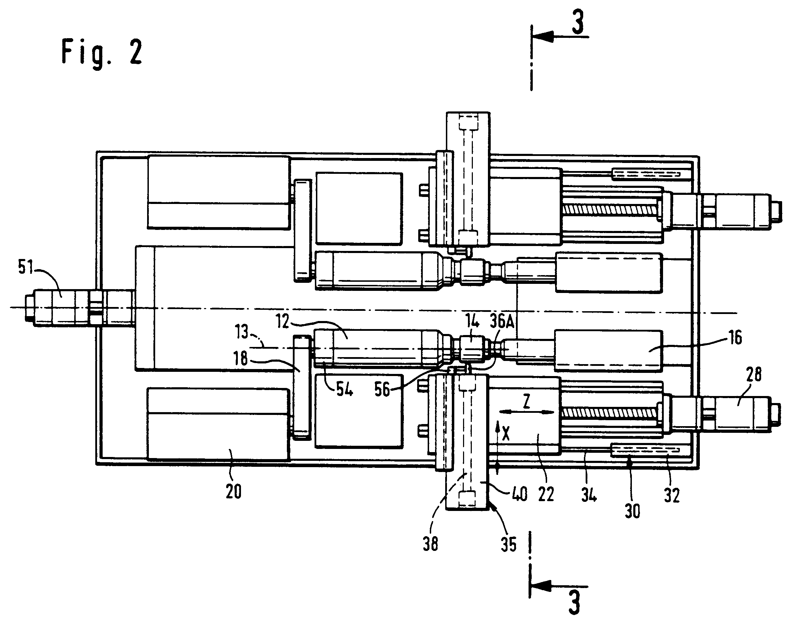

Ein erstes Ausführungsbeispiel einer erfindungsgemäßen Maschine zum Unrunddrehen von Kolben umfaßt, wie in den Fig. 1 bis 3 dargestellt, ein als Ganzes mit 10 bezeichnetes Maschinenbett, an welchem eine Spindel 12 im wesentlichen mit horizontaler Spindelachse 13 gehalten ist, in welcher ein Kolben 14 zur Drehbearbeitung einspannbar ist, welcher seinerseits der Spindel 12 gegenüberliegend durch eine ebenfalls am Maschinengestell 10 koaxial zur Spindel 12 angeordnete rotierende Spannpinole 16 gehalten ist. Die Spindel 12 ist vorzugsweise über einen Treibriemen 18 durch einen Spindelmotor 20 angetrieben, welcher auf dem Maschinenbett 10 sitzt.

Die Spindel 12 und die Spannpinole 16 sind stationär an dem Maschinenbett 10 gehalten und die Spannpinole 16 ist hydraulisch zum Einspannen des Kolbens 14 betätigbar.

Zur Bearbeitung des Kolbens 14 ist an dem Maschinenbett 10 ein in Z-Richtung parallel zur Spindelachse 13 auf Z-Führungen 24 verschieblich gelagerter Z-Schlitten 22 vorgesehen, welcher durch eine Kugelrollspindel 26, angetrieben von einem Z-Achsen-Antrieb 28 in der Z-Richtung definiert verstellbar ist.

Zur Erfassung der Position des Z-Schlittens 22 relativ zu dem Maschinenbett 10 ist ein Z-Achsen-Sensor 30 vorgesehen, welcher vorzugsweise einen optisch von einer Abtasteinheit 32 abtastbaren Linearmaßstab 34 aufweist.

Auf dem Z-Schlitten 22 ist ein X-Achsen-Antrieb 35 vorgesehen, welcher einen als Linearmotor ausgebildeten in einer senkrecht zur Z-Richtung und somit senkrecht zur Spindelachse 13 und vorzugsweise horizontal verlaufenden X-Richtung verschieblichen Werkzeugträger 38 und eine Linearverschiebeeinrichtung 40 aufweist, mittels welcher der Werkzeugträger 38 in der X-Richtung gesteuert positionierbar ist.

Der in der X-Richtung verschiebliche Werkzeugträger 38 trägt - wie später im Detail beschrieben - zwei in X-Richtung auf den Kolben 14 zustellbare Werkzeuge 36A und 36B, wobei die gesamte Anordnung des Werkzeugträgers 38 mit der Linearverschiebeeinrichtung 40 nachfolgend noch im Detail beschrieben ist. Die in X-Richtung auf den Kolben 14 zustellbaren Werkzeuge 36A und 36B dienen dazu, den Kolben unrund zu bearbeiten.

Um die beiden Werkzeuge 36A und 36B wechselweise in Einsatz bringen zu können, ist die Linearverschiebeeinrichtung 40 ihrerseits zwischen zwei Anschlagstellungen definierenden Anschlägen 41 und 42, die als Anschlagleisten ausgebildet sind, in einer Werkzeugwechselrichtung 43 auf Verschiebeführungen 44 bewegbar. Hierzu ist ein Antrieb 45 vorgesehen, welcher entweder so auf die Linearverschiebeeinrichtung 40 einwirkt, daß diese entweder an dem Anschlag 41 anliegt, wobei der Kolben 14 mit dem Werkzeug 36A bearbeitet wird, oder an dem Anschlag 42, wobei der Kolben 14 mit dem Werkzeug 36B bearbeitet wird.

Die Anschläge 41 und 42 sind dabei so angeordnet, daß die Schneiden der Werkzeuge 36A und 36B dann, wenn diese in ihrer Bearbeitungsposition stehen, in derselben Schnittebene 46 liegen, die vorzugsweise durch die Spindelachse 13 hindurchverläuft.

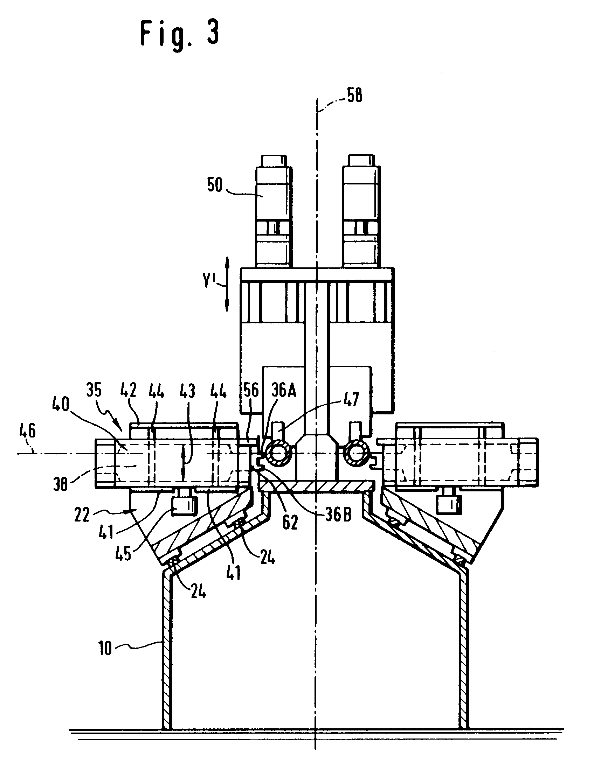

Um in derselben Aufspannung des Kolbens 14 in diesen auch noch Kolbenringnuten einarbeiten zu können, ist, wie in Fig. 1 und 3 dargestellt, in einer Y'-Richtung, die senkrecht auf der X-Richtung und der Z-Richtung sowie der Spindelachse 13 steht, ein Y'-Werkzeug 47 vorgesehen, welches an einem Y'-Schlitten 48 gehalten ist, der seinerseits verschieblich an einem Z'-Schlitten 49 gelagert und in der Y'-Richtung durch einen Y'-Achsen-Antrieb 50 positionierbar ist.

Der Z'-Schlitten 49 ist seinerseits an dem Maschinenbett 10 in Z'-Richtung, welche parallel zur Z-Richtung und zur Spindelachse 13 verläuft, verschieblich gelagert und durch einen Z'-Achsen-Antrieb 51 in der Z'-Richtung verstellbar. Vorzugsweise ist der Z'-Schlitten auf der Seite des Kolbens 14 angeordnet, auf welcher die Spindel 12 liegt und sitzt über der Spindel 12, wobei der Z'-Achsen-Antrieb 51 auf der der Spindel 12 gegenüberliegenden Seite des Spindelmotors 20 sitzt.

Zur Steuerung des Werkzeugträgers 38 ist eine als Ganzes mit 52 bezeichnete Steuereinrichtung vorgesehen, welche über den Z-Achsen-Sensor 30 den Z-Achsenantrieb 28 und somit den Z-Schlitten 22 ansteuert, die Spindel 12 über den Spindelmotor 20 als drehwinkelgesteuerte C-Achse ansteuert, wozu als C-Achsen-Sensor ein Drehwinkelgeber 54 koaxial zur Spindel 12 vorgesehen und mit dieser verbunden ist. Ferner wird der Vorschub des die X-Werkzeuge 36A, B tragenden Werkzeugträgers 38 über die Linearverschiebeeinrichtung 40 gesteuert, wobei zur Erfassung der Bewegungen des Werkzeugträgers 38 in X-Richtung ein X-Achsen-Sensor 56 vorgesehen ist, welcher die Relativbewegungen des Werkzeugträgers 38 relativ zum Z-Schlitten 22 erfaßt.

Die erfindungsgemäße Vorrichtung zum Unrunddrehen von Kolben ist ferner bevorzugt symmetrisch zu einer Mittelebene 58 aufgebaut und erlaubt die Bearbeitung zweier Kolben 14 gleichzeitig, wobei alle vorstehend genannten Teile bis auf den Z'-Achsenantrieb 50 und den Z'-Schlitten 46 doppelt vorhanden sind.

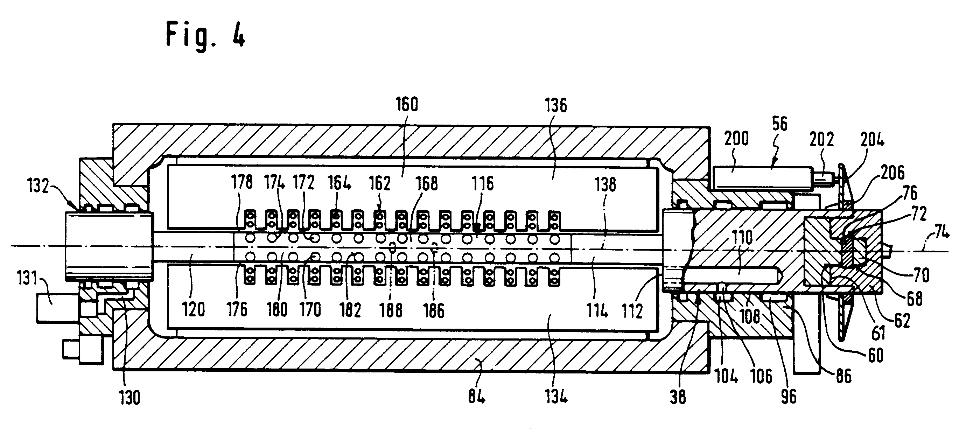

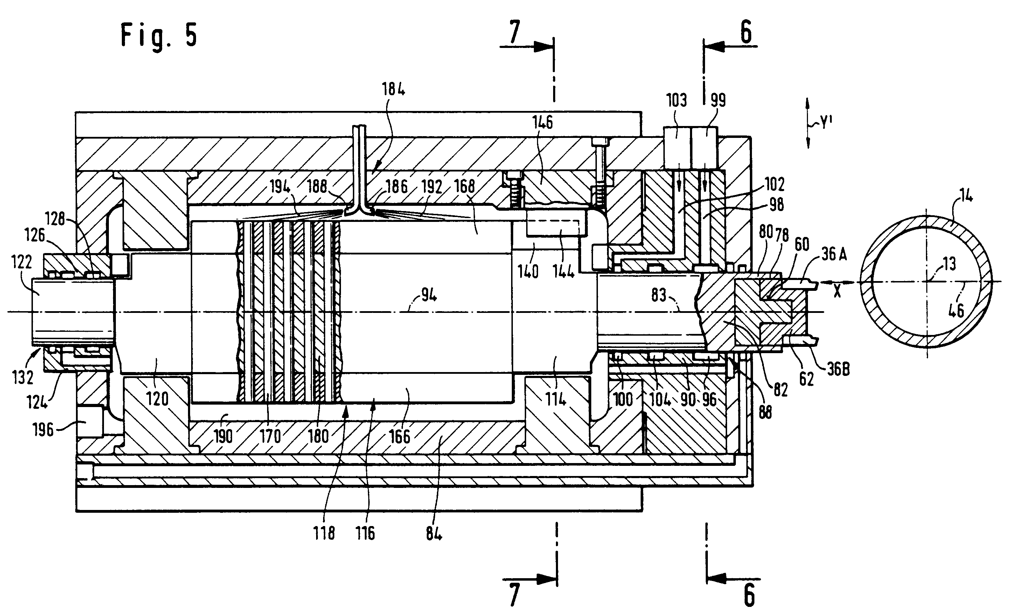

Die Linearverschiebeeinrichtung 40 mit dem Werkzeugträger 38, in Fig. 4 und 5 in vergrößertem Maßstab dargestellt, umfaßt eine Werkzeughalteraufnahme 60, in welche ein Werkzeughalter 62 einsetzbar und gegen eine Maßanschlagfläche 61 der Werkzeughalteraufnahme 60 anlegbar ist, der zwei in Y'-Richtung übereinander ange- ordnete Werkzeuge 36A und 36B trägt. Dieser Werkzeughalter 62 umfaßt eine zentrale Bohrung 68, in welche ein Zen- trierzapfen 70 der Werkzeughalteraufnahme 60 einführbar ist. Zum Verspannen des Werkzeughalters 62 ist die zentrale Bohrung 68 noch zusätzlich mit einer ringförmigen Nut 72 versehen, in welche radial zu einer Zapfenachse 74 verschiebliche Spannkeile 76 der Werkzeughalteraufnahme 60 eingreifen, um den Werkzeughalter 62 zu spannen und gegen die Maßanschlagfläche 61 anzulegen.

Darüberhinaus ist der Werkzeughalter 62 noch an seiner der Werkzeughalteraufnahme 60 zugewandten Außenseite 78 von zylindersegmentartig ausgebildeten Umfassungen 80 der Werkzeughalteraufnahme 60 umgriffen.

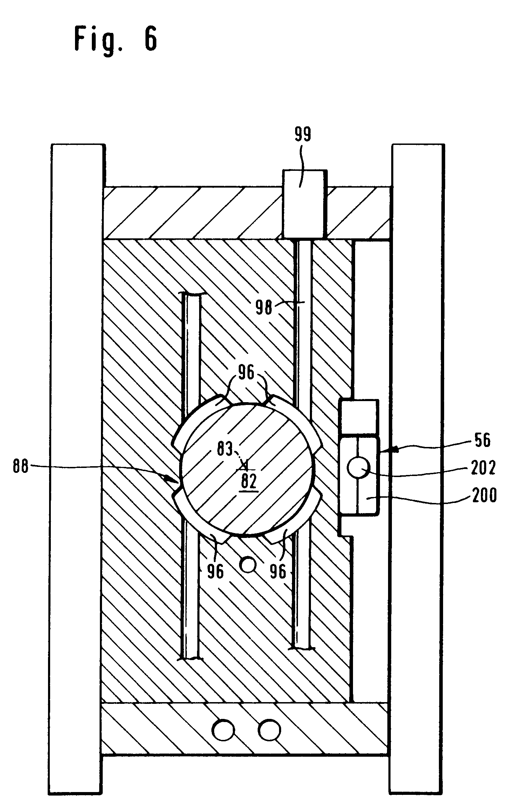

Die Werkzeughalteraufnahme 60 liegt unmittelbar vor einem vorderen zylindrischen Führungskörper 82 des Werkzeugträgers 38, welcher zusammen mit einer an einem Gehäuse 84 gehaltenen vorderen Lagerschale 86 ein als Ganzes mit 88 bezeichnetes vorderes Gleitlager bildet. Dieses vordere Gleitlager 88 ist als hydrostatisches Lager ausgebildet und umfaßt, wie in Fig. 4, 5 und 6 dargestellt, einen den als Gleitstück dienenden zylindrischen vorderen Führungskörper 82 aufnehmenden Lagerring 90, wobei eine Zylinderachse 83 des vorderen Führungskörpers 82 als Führung und des Lagerrings 90 mit einer Längsachse 94 des Werkzeugträgers 38 zusammenfallen.

Der Lagerring 90 weist, wie in den Fig. 4, 5 und 6 dargestellt, vordere, im Winkelabstand voneinander angeordnete und sich über einen Winkelbereich erstreckende Drucktaschen 96 auf, welche jeweils über eine eigene Druckleitung 98 mit Druckmedium beaufschlagbar sind. Desgleichen sind in dem Lagerring 90 im Abstand von den vorderen Drucktaschen 96 hintere Drucktaschen 100 angeordnet, die ebenfalls jeweils über eine eigene Druckleitung 102 mit Druckmedium beaufschlagbar sind. Zwischen den vorderen Drucktaschen 96 und den hinteren Drucktaschen 100 ist eine Sammelnut 104 in dem Lagerring 90 vorgesehen, welche rings um den zylindrischen vorderen Führungskörper 82 umläuft und mit einer Rücklaufbohrung 106 verbunden ist, die von einer Außenmantelfläche 108 des vorderen Führungskörpers 82 in diesen hinein verläuft und in einen in dem vorderen Führungskörper 82 parallel zu dessen Längsachse 94 verlaufenden Rücklaufkanal 110 mündet. Dieser Rücklaufkanal 110 tritt an einer der Werkzeughalteraufnahme 60 abgewandten rückwärtigen Stirnseite 112 des vorderen Führungskörpers 82 aus diesem aus.

An den vorderen Führungskörper 82 schließt sich an dessen der Werkzeughalteraufnahme 60 gegenüberliegenden Seite ein vorderes Zwischenstück 114 an, an welchem auf seiner dem vorderen Führungskörper 82 gegenüberliegenden Seite ein Sekundärteil 116 eines als Ganzes mit 118 bezeichneten Linearmotors gehalten ist. Dieses Sekundärteil 116 ist auf seiner dem vorderen Zwischenstück 114 gegenüberliegenden Seite wiederum an einem hinteren Zwischenstück 120 gehalten, an welches sich ein hinterer als Gleitstück dienender Führungskörper 122 anschließt, der ebenfalls eine zur Längsachse 94 koaxiale zylindrische Form aufweist und in einer hinteren Lagerschale 124 gehalten ist, welche ihrerseits mit einem den hinteren als Führung dienenden Führungskörper 122 umschließenden Lagerring 126 versehen ist, der ebenfalls mit vier im Winkelabstand voneinander angeordneten und sich ebenfalls über einen Winkelbereich erstreckenden Drucktaschen 128 versehen ist, die jeweils über eigene Druckleitungen 130 mit Druckmedium beaufschlagbar sind.

Somit bilden die Drucktaschen 128 zusammen mit dem Lagerring 126 und dem hinteren Führungskörper insgesamt ein hinteres Gleitlager 132.

Jede einzelne der Druckleitungen 98, 102 und 130 und somit jede einzelne der Drucktaschen 96, 100 und 128 wird über einen eigenen Regler 99, 103 und 131 versorgt, welcher den Taschendurchfluß entsprechend dem Taschendruck regelt und zwar so, daß bei zunehmendem Taschendruck der Taschendurchfluß linear zunimmt.

Der Werkzeugträger 38 umfaßt somit den hinteren Lagerkörper 122, das Zwischenstück 120, integriert das Sekundärteil 116 des Linearmotors 18, setzt sich dann in dem Zwischenstück 22 und dem vorderen Führungskörper 82 bis zur Werkzeughalteraufnahme 60 fort und weist auch den auswechselbaren Werkzeughalter 62 auf. Dabei wird der Werkzeugträger 38 durch das vordere Gleitlager 88 und das hintere Gleitlager 132, insbesondere deren Lagerschalen 86 und 124, an dem Gehäuse 84 geführt.

Dieses Gehäuse 84 nimmt außerdem noch Primärteile 134 und 136 des Linearmotors 18 auf, wobei das Primärteil 134 und das Primärteil 136 das Sekundärteil 116 zwischen sich einschließen, welches jeweils gegenüberliegende und den Primärteilen 134 und 136 zugewandte Oberflächen aufweist, zwischen denen eine zu diesen parallele Mittelebene 138 liegt, die ihrerseits vorzugsweise senkrecht auf der Schnittebene 46 steht. Die beiden Primärteile 134 und 136 erstrecken sich dabei im wesentlichen über die gesamte Distanz zwischen den Gleitlagern 88 und 132 und übergreifen in Richtungen parallel zu der Mittelebene 138 das Sekundärteil 116, vorzugsweise zwischen deren Lagerschalen 86 und 124, so daß sich die Zwischenstücke 120, die nicht zum Sekundärteil 116 gehören, zwischen die Primärteile 134 und 136 hinein erstrecken und vorzugsweise senkrecht zu der zwischen den Primärteilen 134 und 136 liegenden Mittelebene 138 die gleiche Dicke wie das Sekundärteil 116 aufweisen.

Zur Verdrehsicherung und Drehmomentabstützung des Werkzeugträgers 38 ist das vordere Zwischenstück 114 mit einem sich symmetrisch zu der zwischen den beiden Primärteilen 134 und 136 liegenden Mittelebene 138 erstreckenden Keil 140 versehen, welcher ebenfalls noch zwischen den Primärteilen 134 und 136 liegt und in einer Keilnut 142 läuft, welche in einer zwischen die Primärteile 134 und 136 vorspringenden Nase 144 eingearbeitet ist, wobei die Nase 144 Teil eines Füllstücks 146 ist, das seinerseits an dem Gehäuse 84 gehalten ist.

Beide Keilflächen 148 des Keils 140 sind mit Öltaschen 150, 151 versehen, welchen gegenüberliegend Öffnungen 152, 153 von durch das Füllstück 146 und die Nase 144 geführten Druckkanälen 154, 155 angeordnet sind, durch welche Druckmedium in den Öltaschen 150, 151 eingebracht wird, so daß der Keil 140 spielfrei symmetrisch zur Mittelebene 138 in der Keilnut 142 geführt ist.

Jede der Druckkanäle 154 und 155 ist mit einem eigenen Regler 157, 159 versehen der den Druck und den Taschendurchfluß in den Öltaschen 150, 151 so steuert, daß bei steigendem Druck der Taschendurchfluß linear zunimmt.

Damit ist der Werkzeugträger 38 einerseits zur Aufnahme von quer zu der Längsachse 94 wirkenden Kräften durch die Werkzeuge 36A oder 36B in den Gleitlagern 88 und 132 geführt, wobei das Gleitlager 88 die größten derartigen Kräfte aufnimmt und außerdem noch durch eine von dem Keil 140 und der Keilnut 142 gebildeten Verdrehsicherung 156 auch noch gegen Verdrehungen um die Längsachse 94 gesichert.

Der Linearmotor 118 ist vorzugsweise als Drehstrom-Asynchron-Linearmotor, vorzugsweise als Doppelkamm-Linearmotor ausgebildet, bei welchem die beiden Primärteile 134 und 136 jeweils aus einem Eisenkern 160 aufgebaut sind, welcher dem Sekundärteil 116 zugewandte und parallel zur Mittelebene 138 quer über die gesamte Breite des Sekundärteils 116 verlaufende Nuten 162 aufweist, in welchen die Erregerwicklungen 164 liegen.

Ferner ist das Sekundärteil 116 mit Kurzschlußwicklungen versehen, welche beiderseits des Sekundärteils 116 verlaufende und sich parallel zur Längsachse 94 über die gesamte Länge des Sekundärteils 116 erstreckende äußere Kupferstäbe 166 und 168 umfassen, die symmetrisch zur Mittelebene 138 liegen und sich über die gesamte Dicke des Sekundärteils 116 senkrecht zur Mittelebene 138 erstrecken. Diese äußeren Kupferstäbe 166 und 168 sind durch parallel zu den Nuten 162 und somit parallel zur Mittelebene 138 und senkrecht zur Längsachse 94 verlaufende Kupferstäbe 170 und 172 elektrisch leitend verbunden, wobei die Kupferstäbe 170 und 172 jeweils in parallel zur Mittelebene 138 liegenden Ebenen so angeordnet sind, daß sie mit ihrer Außenmantelfläche 174 bis zu der jeweiligen Oberfläche 176 bzw. 178 des Sekundärteils 116 reichen, jedoch senkrecht zur Mittelebene 138 einen Abstand voneinander aufweisen.

Die äußeren Kupferstäbe 166 und 168 sowie die Kupferstäbe 170 und 172 sind vorzugsweise an einem einen Eisenkern bildenden Trägerkörper 180 des Sekundärteils 116 gehalten, welcher seinerseits senkrecht zur Mittelebene 138 dieselbe Dicke wie die äußeren Kupferstäbe 166 und 168 aufweist und sich zwischen diesen erstreckt. Dieser Trägerkörper 180 ist seinerseits mit Bohrungen 182 versehen, in welchen die Kupferstäbe 170 und 172 liegen.

Um Verformungen des Sekundärteils 116 durch ungleichmäßige Temperatur innerhalb desselben zu vermeiden, ist eine Temperierung 184 für dieses vorgesehen, welche vorteilhafterweise Ölduschen 186, 188 umfaßt, die über dem Sekundärteil 116 angeordnet sind und diese mit Öl duschen, welches über das Sekundärteil 116 in einen unter dem Sekundärteil 116 liegenden Sumpf 190 abläuft. Damit dies möglichst gleichmäßig erfolgt sind die Ölduschen 186 und 188 ungefähr mittig des Sekundärteils 116 angeordnet und verteilen das Öl in entgegengesetzte Richtungen parallel zur Längsachse 94 des Sekundärteils 116, wobei Duschstrahlen 192 und 194 derselben auf dem oberen Kupferstab 168 auftreffen.

Vorzugsweise wird als Öl für die Öldusche das für die hydrostatischen Gleitlager 88 und 132 verwendete Öl eingesetzt, so daß sich in einfacher Weise das aus diesen Gleitlagern 88, 132 auslaufende Öl in den Sumpf 190, beispielsweise über dem Rücklaufkanal 110 einleiten und dann von diesem ausgehend wiederverwenden läßt. Hierzu dient der in den Ölsumpf 190 mündende Ölrücklauf 196.

Der Drehstrom-Asynchron-Linearmotor 118 arbeitet nun so, daß jeweils durch Erregerwicklungen 164 ein magnetisches Wanderfeld erzeugt wird, durch dessen zeitliche und räumliche Änderung in dem von den Kupferstäben gebildeten Gitter Ströme induziert werden. Diese Ströme bewirken ihrerseits ein magnetisches Gegen-Wanderfeld, das mit dem von den Erregerwicklungen 164 erzeugten Feld wechselwirkt und somit zu einer Verschiebebewegung des Werkzeugträgers 38 in X-Richtung führt. Das Wanderfeld in der Erregerwicklung wird mit Hilfe der feldorientierten Flußführung und dem Pulsumrichter so erzeugt, daß an dem Sekundärteil die der feldorientierten Flußführung vorgegebene Kraft praktisch verzögerungsfrei wirkt.

Zur Erfassung der Verschiebung des Werkzeugträgers 38 relativ zum Schlitten 22 ist, wie in Fig. 4 dargestellt, an dem Gehäuse 84, das seinerseits in X-Richtung unverschieblich auf dem Z-Schlitten 22 montiert ist, der X-Achsen-Sensor 56 gehalten. Dieser ist mit einem stationären Teil 200 an der vorderen Lagerschale 86 montiert, während ein beweglicher Teil 202 desselben fest mit einem versteiften Arm 204 verbunden ist, der seinerseits an einem die Umfassungen 80 umschließenden und mit diesen verbundenen Ring 206 gehalten ist. Damit greift der Arm 204 unmittelbar an der Werkzeughalteraufnahme 60 und somit in unmittelbarer Nachbarschaft des Werkzeughalters 62 an, um jegliche Längenveränderungen der übrigen Teile des Werkzeugträgers 38 zu eliminieren.

Vorzugsweise ist der X-Achsen-Sensor 56 ein optischer Längensensor, wobei das bewegliche Teil 202 ein optisch ablesbarer Linearmaßstab ist.

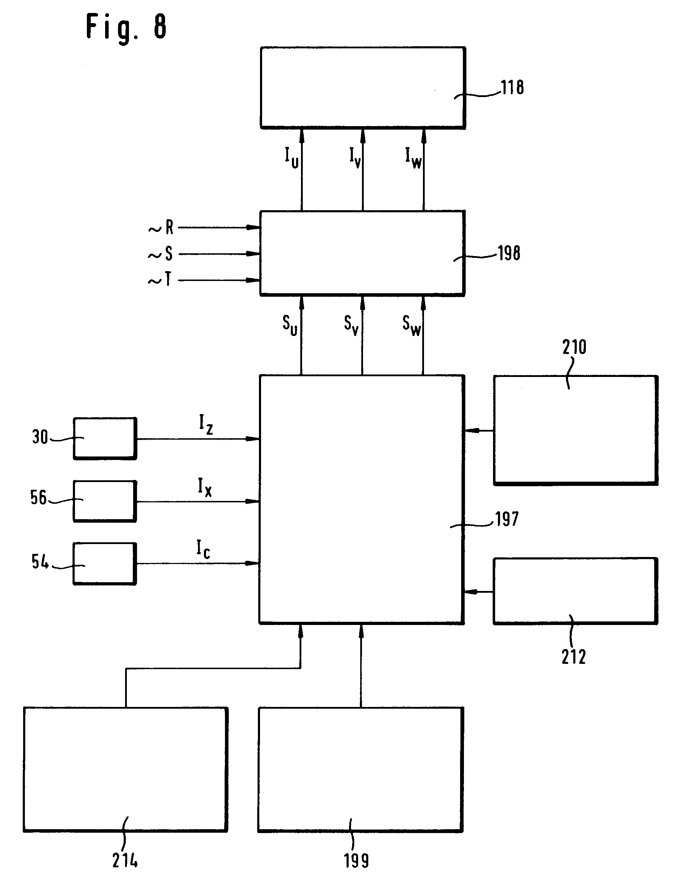

Zur Ansteuerung des Drehstrom-Asynchron-Linearmotors 118 umfaßt die Steuereinrichtung 52, wie in Fig. 8 schematisch dargestellt, einen X-Achsen-Rechner 197, welcher den vom Z-Achsen-Sensor 30 gemessenen Wert Iz, den vom X-Achsen-Sensor 56 gemessenen Wert Ix und den vom C-Achsen-Sensor 54 gemessenen Wert Ic erfaßt. Mit diesen Werten berechnete der X-Achsen-Rechner 197 Strom-Soll-Werte Su, Sv, Sw, welche ein Umrichter 198 unter Heranziehung von Drehstrom mit den Phasen R, S, T aus dem Netz in Drehstrom mit den Einzelströmen Iu, Iv und Iw umsetzt, mit welchen letztlich die Erregerwicklungen 164 der Primärteile 134 und 136 bestromt werden.

Weitere Einzelheiten betreffend die Merkmale Ansteuerung und Funktion eines derartigen Asynchron-Linear-Motors sind ausführlich in der Zeitschrift "Werkstattstechnik" 79 (1989), Seite 647-650 offenbart, auf welche vollinhaltlich Bezug genommen wird.

Der X-Achsen-Rechner 197 stellt lediglich einen Teil der Steuereinrichtung 52 dar, welche die gesamte erfindungsgemäße Maschine steuert. Diese Steuereinrichtung 52 umfaßt neben dem X-Achsen-Rechner 197 noch eine Maschinensteuerung 199, welche die als C-Achse betriebene Spindel 12 sowie den Z-Achsenantrieb 28 und darüberhinaus noch andere Maschinenfunktionen in konventioneller Weise steuert. Von der Maschinensteuerung 199 ist lediglich die Steuerung der X-Achse ausgenommen und auf den X-Achsen-Rechner 197 verlagert.

Um eine Kontur des zu bearbeitenden Kolbens 14 speichern zu können, ist dem X-Achsen-Rechner 197 unmittelbar ein Speicher 210 zugeordnet. Ferner wird der X-Achsen-Rechner 197 noch durch einen integrierten Taktgenerator 212 betrieben, wobei die Funktion und Aufgabe des Taktgenerators später im einzelnen erläutert wird.

Um die Kontur des zu bearbeitenden Kolbens 14 in dem dem X-Achsen-Rechner 197 zugeordneten Speicher 212 ablegen zu können, ist vorteilhafterweise zusätzlich noch eine Eingabeperipherie 214 vorgesehen, welche im einfachsten Fall ein PC ist. Die Eingabeperipherie 214 kann aber auch ein weiterer wesentlich aufwendiger ausgebildeter Rechner sein.

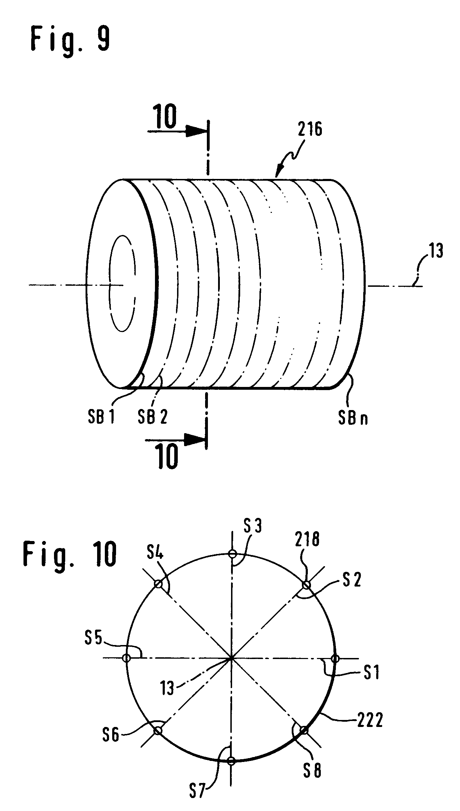

Alternativ dazu ist es auch denkbar, die Eingabe der Kontur über die Maschinensteuerung 199 vorzunehmen. Die Kontur 216, gemäß welcher der Kolben 14 zu bearbeiten ist, ist in Fig. 9 und 10 illustriert. Die Kontur 216 wird dabei in einzelne, koaxial zur Spindelachse 13 und äquidistant zueinander angeordnete Scheiben SB1 bis SBn aufgeteilt, wobei jede Scheibe SB durch, wie in Fig. 10 dargestellt, eine Serie von der Einfachheit halber acht zeichnerisch dargestellten Stützstellen S1 bis S8 repräsentiert ist, welche jeweils den radialen Abstand eines Punktes 218 auf einer Mantelfläche 222 der Kontur 216 von der Spindelachse 13 repräsentieren, wobei die einzelnen Punkte 218 in gleichen Winkelabständen von in der Fig. 10 dargestellten 45° relativ zueinander um die Spindelachse 13 herum angeordnet sind. Somit gehören zu jeder der Scheiben SB1 bis SBn jeweils acht Stützstellen S1 bis S8.

Beim Bearbeiten eines Kolbens 14 in der erfindungsgemäßen Maschine wird nun, der C-Achsen-Antrieb 20 von der Maschinensteuerung 199 so angesteuert, daß sie mit konstanter Geschwindigkeit dreht. Der Z-Achsen-Antrieb 28 wird von der Maschinensteuerung 199 mit konstanter Vorschubgeschwindigkeit in Z-Richtung angesteuert. Das im Einsatz befindliche Werkzeug 36 beschreibt somit mit seiner Spitze eine Spiralbahn auf der Mantelfläche 222 des Kolbens 14.

Die X-Achsen-Steuerung 197 ermittelt zu bestimmten Zeitpunkten die Positionen der C- und Z-Achse. Der dadurch repräsentierte Punkt auf der Mantelfläche 222 liegt in der Regel zwischen zwei Scheiben SB, beispielsweise SB2 und SB3, und auch zwischen zwei Stützstellen S, beispielsweise S4 und S5. Der zu diesem Punkt gehörende X-Soll-Wert kann durch zweidimensionale lineare oder höhere Interpolationsverfahren aus den umliegenden vier Stützstellen, beispielsweise S4 und S5 von SB2 und S4 und S5 von SB3, berechnet werden.

Die Anzahl der Stützstellen S und Scheiben SB kann von einer Bedienungsperson bei der Eingabe derselben beliebig gewählt werden. Die erforderliche Anzahl hängt von der Geometrie des Werkstücks, der gewünschten Genauigkeit und der Interpolationsart ab. Die Stützstellendichte kann dabei in Teilbereichen des Kolbens 14 unterschiedlich sein.

Zur exakten Ansteuerung des in der Schnittebene 46 stehenden Werkzeugs 36 wird dieses mit der Linearverschiebeeinrichtung 40 so positioniert, daß es an jeder Stelle der Mantelfläche 222, definiert durch die interpolierten Werte, in genau einer der Mantelfläche 222 entsprechenden Stellung steht.

Durch die Aufteilung der Kontur 216 in Scheiben SB1 bis SBn und Stützstellen S1 bis S8 ist, um jeden Punkt auf der Mantelfläche 222 genau berechnen zu können, sowohl eine Interpolation zwischen den Stützstellen S1 bis S8 einer Scheibe erforderlich, um eine Außenform jeder Scheibe zu ermitteln und außerdem eine Interpolation zwischen den äquidistant stehenden Scheiben SB erforderlich, um eine Interpolation zwischen den einzelnen Außenformen der einzelnen Scheiben SB durchzuführen, so daß jeder beliebige, durch einen C-Lage-Wert C (K) und einen Z-Lage-Wert Z (K) festlegbare Punkt der Mantelfläche 222 durch einen Soll-Wert W (K) definiert ist, der den Abstand der Mantelfläche 222 in X-Richtung von der Spindelachse 13 angibt.

Da die Ansteuerung der C-Achse und der Z-Achse über die Maschinensteuerung 199 erfolgt, und da der X-Achsen-Rechner 197 durch den in konstanten Zeitintervallen △ T Taktpulse abgebenden Taktgenerator 212 gestartet wird und nach jedem Start zu einem Zeitpunkt K• △ T eine von mit K bezeichnete Berechnungsroutine zur Ermittlung einer Stellkraft U (K) durchgeführt, dabei ist jeweils bereits zur Ermittlung des Soll-Wertes W (K) der entsprechende C-Lage-Wert C (K) und der entsprechende Z-Lage-Wert Z (K) für den Zeitpunkt K • (△ T) zu ermitteln und mit diesen Lagewerten C (K) und Z (K) die Interpolation zwischen den in Frage kommenden Stützstellen S und Scheiben SB durchzuführen.

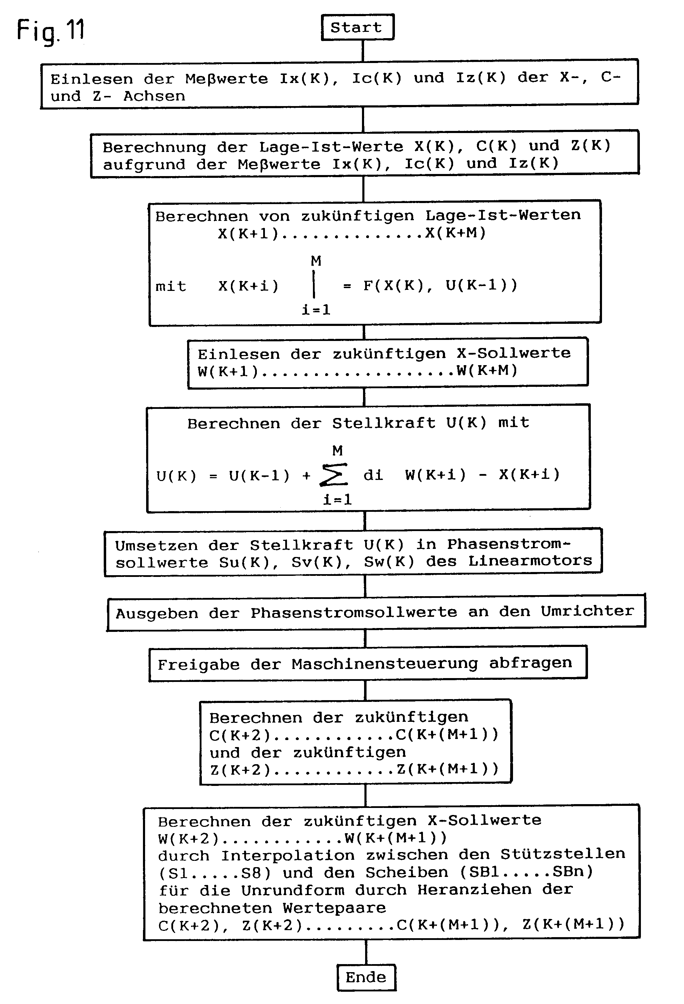

Ein bevorzugtes Ausführungsbeispiel einer derartigen Berechnungsroutine ist in Fig. 11 dargestellt. Gemäß dieser in Fig. 11 dargestellten K-ten Berechnungsroutine für den Zeitpunkt K • (△ T) liest der X-Achsen-Rechner 197 nach seinem Start durch den Taktgenerator 212 zunächst die Meßwerte Ix (K), Ic (K) und Iz (K) aus den jeweiligen Sensoren 56, 54 und 30 ein.

Auf Grund dieser Meßwerte ergeben sich die Lage-Ist-Werte X (K), C (K) und Z (K).

Mit dem gemessenen Lage-Ist-Wert X (K) erfolgt eine Berechnung zukünftiger Lage-Ist-Werte X (K+1) bis X (K+M), die ansich zu späteren Berechnungsroutinen (K+1) bis (K+M) gehören, hierzu wird ein besonderes Rechenverfahren angewandt, welches man als Prädiktion zukünftiger Lage-Ist-Werte bezeichnet. Diese zukünftigen Lage-Ist-Werte X (K+1) bis X (K+M) sind dabei eine Funktion des gemessenen Lage-Ist-Wertes X (K) und der Stellkraft U (K-1) aus der vorhergegangenen Berechnungsroutine.

Anschließend werden die bereits in der vorangegangenen Berechnungsroutine durch Interpolation ermittelten zukünftigen Soll-Werte W (K+1) bis W (K+M) herangezogen, auf deren Berechnung später im einzelnen eingegangen wird.

Anschließend erfolgt ein Berechnen der Stellkraft U (K) der K-ten Verfahrensroutine, die entsprechend einem prädiktiven Regelalgorythmus durchgeführt wird. Ein Ausführungsbeispiel eines prädiktiven Reglers ist in dem Artikel "Hochgenaue Bahnbewegungen an Fertigungseinrichtungen" Werkstatttechnik 80 (1990) Seite 383-386, beschrieben.

Nach der Berechnung der Stellkraft U (K) erfolgt ein Umsetzen dieser Stellkraft in Phasenstrom-Soll-Werten Su (K), Sv (K) und Sw (K) für den Linearmotor 118, die so bemessen sind, daß der Linearmotor 118 mit der entsprechenden Stellkraft in X-Richtung auf das Werkzeug 36 wirkt.

Diese berechneten Phasenstrom-Soll-Werte Su (K), Sv (K) und Sw (K) des Linearmotors werden anschließend an den Umrichter 198 ausgegeben, der - wie bereits beschrieben - für entsprechende Phasenströme Iu, Iv und Iw in den Erregerwicklungen 164 der Primärteile 134 und 136 sorgt.

Nach Durchführung der eigentlichen Stellfunktion wird in der Berechnungsroutine bei der Maschinensteuerung 199 abgefragt, ob die Freigabe für eine weitere Berechnungsroutine noch vorliegt. Gibt die Maschinensteuerung 199 eine weitere Berechnungsroutine frei, so wird in der K-ten Berechnungsroutine mit aus den gemessenen Ist-Werten C (K) und Z (K) und den in der vorangegangenen Berechnungsroutine gemessenen Ist-Werten C (K-1) und Z (K-1) eine Berechnung der zukünftigen C-Lage-Werte C (K+2) bis C (K+M+1) sowie der zukünftigen Z-Lage-Werte Z (K+2) bis Z (K+M+1) durchgeführt.Allgemein formuliert

$$C (K + i) = C (K) + i [C (K) - C (K-1)] \quad i = 2 - M + 1$$
$$Z (K + i) = Z (K) + i [Z (K) - Z (K-1)]$$

Mit diesen zukünftigen Lagewerten C und Z erfolgt eine Berechnung der zukünftigen Soll-Werte W (K+2) bis W (K+M+1) durch Interpolation zwischen den jeweils entsprechenden Stützstellen S1 bis S8 und den Scheiben SB1 bis SBn für die Unrundform oder Kontur 216.

Diese berechneten zukünftigen Soll-Werte W (K+2) bis W (K+M+1) werden von dem X-Achsen-Rechner 197 umgespeichert, und zwar folgendermaßen:

$$W (K + i) = W (K + i-1)$$

Somit können diese zukünftigen Soll-Werte W in der (K+1) Berechnungsroutine als zukünftige Soll-Werte verwendet werden.

Bei der in Fig. 11 beispielhaft dargestellten Berechnungsroutine für die Stellkraft U (K) werden alle Rechenoperationen, die nicht auf den gemessenen Lage-Ist-Werten X (K), C (K) und Z (K) basieren in der vorhergehenden Berechnungsroutine durchgeführt, um nach Einlesen der Meßwerte Ix (K), Ic (K) und Iz (K) möglichst schnell die Phasenstrom-Soll-Werte Su (K), Sv (K) und Sw (K) zu ermitteln, wobei Sw (K) durch Su (K) und Sv (K) genau bestimmt ist, so daß der Zeitabstand zwischen der Messung der Lage-Ist-Werte X (K) C (K) und Z (K) und der Ausgabe der Phasenstrom-Soll-Werte Su (K), Sv (K) und Sw (K) möglichst kurz gehalten wird, um eine möglichst hohe Regelgüte zu erhalten.

Darüberhinaus wird durch die Verwendung einer prädiktiven Regelung sichergestellt, daß alle Schleppfehler der Linearverschiebeeinrichtung 40 berücksichtigt sind und somit zum jeweiligen Zeitpunkt K • (△ T) das in der Schnittebene 46 liegende Werkzeug 36 genau die durch die Kontur 216 vorgegebene X-Position einnimmt.

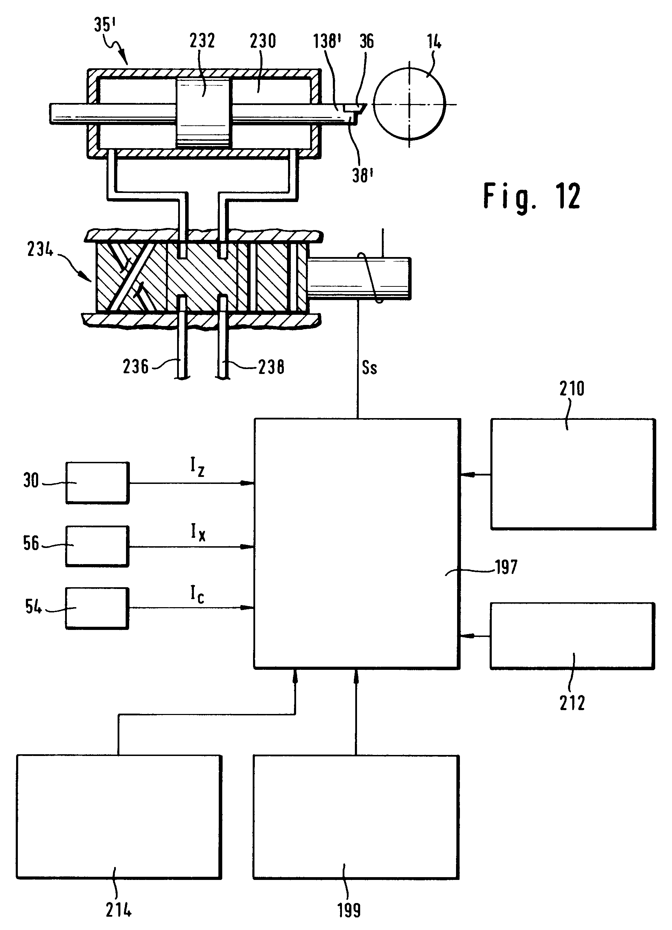

Bei einem zweiten Ausführungsbeispiel der erfindungsgemäßen Maschine, schematisch dargestellt in Fig. 12, umfaßt der X-Achsen-Antrieb 35' anstelle des Linearmotors 118 einen Stellzylinder 230 mit einem Kolben 232, der seinerseits fest mit einer einen Werkzeugträger 138' bildenden Kolbenstange verbunden ist. Dieser Werkzeugträger 38' trägt seinerseits in bekannter Weise das Werkzeug 36 zur Bearbeitung des Kolbens 14.

Der Stellzylinder 230 ist dabei angesteuert durch ein Servoventil 234, welches die Zufuhr von Hydraulikmedium aus einer Druckleitung 236 zum Stellzylinder 230 steuert und außerdem eine Rücklaufleitung 238 in entsprechender Weise mit dem Stellzylinder 230 verbindet.

Das Servoventil 234 ist seinerseits angesteuert durch ein Steuersignal Ss, welches der X-Achsen-Rechner 197 abgibt. Im Gegensatz zum ersten Ausführungsbeispiel ist somit der X-Achsen-Rechner 197 anstelle mit dem Umrichter 198 mit dem Servoventil 234 verbunden und steuert dieses entsprechend der berechneten Stellgröße an, wobei die Stellgröße in gleicher Weise wie beim vorhergehenden Ausführungsbeispiel berechnet wird.

## Patentansprüche

1. Maschine zum Unrundbearbeiten von Werkstücken umfassend ein Maschinengestell, eine am Maschinengestell gehaltene Werkstückspindel zur Aufnahme eines Werkstücks, einen C-Achsen-Sensor zur Erfassung der Drehstellungen der Werkstückspindel, einen auf dem Maschinengestell angeordneten, in Z-Richtung parallel zur Werkstückspindel verschiebbaren Z-Schlitten mit einem Z-Achsen-Antrieb, einen Z-Achsen-Sensor zur Erfassung der Lage des Z-Schlittens, einen auf dem Z-Schlitten angeordneten X-Achsen-Antrieb, mit welcher ein Werkzeug in X-Richtung auf das Werkstück zustellbar ist,einen X-Achsen-Sensor zur Erfassung der Lage des Werkzeugs, und eine Steuereinrichtung zur Ansteuerung des X-Achsen-Antriebs in Abhängigkeit von dem von dem C-Achsen-Sensor und dem X-Achsen-Sensor gemessenen Werten so, daß eine der Steuereinrichtung vorgegebene unrunde Form des Werk- stücks bei der Bearbeitung entsteht, **dadurch gekennzeichnet**, daß die Steuereinrichtung eine numerische Maschinensteuerung (199) aufweist, welche die Werkstückspindel (12) und den Z-Achsen-Antrieb (28) ansteuert, sowie eine numerische X-Achsen-Steuerung (197) umfaßt, daß die X-Achsen-Steuerung (197) unabhängig von der Maschinensteuerung (199) den X-Achsen-Antrieb entsprechend der vorgegebenen unrunden Form ansteuert und daß nach bestimmten Zeitintervallen (△ T) eine Koordination zwischen der Maschinensteuerung (199) und der X-Achsen-Steuerung (197) erfolgt.

2. Maschine nach Anspruch 1, dadurch gekennzeichnet, daß die X-Achsen-Steuerung (197) die von dem C-Achsen-Sensor (54) und dem X-Achsen-Sensor (56) gemessenen Ist-Werte ermittelt.

3. Maschine nach Anspruch 1 oder 2, dadurch gekennzeichnet, daß die X-Achsen-Steuerung (197) die X-Lage-Ist-Werte des Werkzeugs (36) überprüft und entsprechend dem Ergebnis den X-Achsen-Antrieb (35) über eine Stellgröße (U-(K)) ansteuert.

4. Maschine nach einem der voranstehenden Ansprüche, dadurch gekennzeichnet, daß in die X-Achsen-Steuerung (197) ein Taktgenerator (212) integriert ist, welcher nach Ablauf eines festlegbaren Zeitintervalls (△ T) zu diskreten Zeitpunkten (K • (△ T)) eine Berechnungsroutine startet, im Laufe welcher das Stellsignal (U-(K)) für den X-Achsen-Antrieb (35) ermittelt wird.

5. Maschine nach Anspruch 4, dadurch gekennzeichnet, daß in der Berechnungsroutine die Stellgröße (U(K)) ermittelt wird, welches von dieser Berechnungsroutine zu dem diesem zugeordneten Zeitpunkt (K • (△ T)) ausgegeben wird.

6. Maschine nach Anspruch 4 oder 5, dadurch gekennzeichnet, daß die X-Achsen-Steuerung (197) in der Berechnungsroutine nacheinander vorgegebene Operationen ausführt und nach Beendigung der Operationen auf einen erneuten Start der Berechnungsroutine durch den Taktgenerator (212) wartet.

7. Maschine nach Anspruch 6, dadurch gekennzeichnet, daß nach dem Einlesen der Lage-Ist-Werte die Berechnung der Stellgröße (U(K)) auf der Basis von Lage-Ist-Werten (X) und von Lage-Soll-Werten (W) erfolgt.

8. Maschine nach Anspruch 7, dadurch gekennzeichnet, daß das Stellsignal (U(K)) auf der Basis zukünftiger, vorausberechneter Lage-Ist-Werte (X(K + i)) und zukünftiger, vorausberechneter Lage-Soll-Werte (W(K+i)) ermittelt wird.

9. Maschine nach einem der voranstehenden Ansprüche, dadurch gekennzeichnet, daß der X-Achsen-Steuerung (197) ein Konturwertespeicher (210) zugeordnet ist, in welchem Parameter (SB, S) für die unrunde Form des Werkstücks (14) abgespeichert sind.

10. Maschine nach Anspruch 9, dadurch gekennzeichnet daß die X-Achsen-Steuerung (197) mit den C- und Z-Lage-Ist-Werten (C, Z) und den Parametern (SB, S) im Konturwertespeicher (210) die X-Lage-Soll-Werte (W) ermittelt.

11. Maschine nach Anspruch 10, dadurch gekennzeichnet, daß die Parameter für die unrunde Form als Radienstützstellen (S) für aufeinanderfolgende Scheiben (SB) des Werkstücks (14) im Konturwertespeicher (210) abgelegt sind.

12. Maschine nach Anspruch 11, dadurch gekennzeichnet, daß die X-Achsen-Steuerung (197) zwischen den Radienstützstellen (S) einer Scheibe (SB) interpoliert.

13. Maschine nach Anspruch 11 bis 12, dadurch gekennzeichnet, daß die X-Achsen-Steuerung (197) zwischen den Radienstützstellen (S) aufeinanderfolgender Scheiben (SB) interpoliert.

14. Maschine nach einem der Ansprüche 8 bis 13, dadurch gekennzeichnet, daß die X-Achsen-Steuerung (197) einen der zukünftigen X-Lage-Soll-Werte durch Berechnung eines zukünftigen C-Lage-Ist-Werts (C(K+i)) und eines zukünftigen Z-Lage-Ist-Werts (Z(K+i)) ermittelt.

15. Maschine nach Anspruch 14, dadurch gekennzeichnet, daß die X-Achsen-Steuerung (197) eine vorbestimmte Anzahl (M) zukünftiger X-Lage-Soll-Werte (W) ermittelt und zur Berechnung eines Stellsignals (U(K)) zu einem bestimmten Zeitpunkt heranzieht.

16. Maschine nach einem der Ansprüche 8 bis 15, dadurch gekennzeichnet, daß von der X-Achsen-Steuerung (197) die Berechnung der zukünftigen X-Lage-Soll-Wert (W(K+i)) vor dem Einlesen der zu einem bestimmten Zeitpunkt gehörigen Lage-Ist-Werte (X, C, Z) erfolgt.

17. Maschine nach einem der Ansprüche 8 bis 16, dadurch gekennzeichnet, daß die zukünftigen X-Lage-Soll-Werte (W(K+i)) für eine Berechnungsroutine (K) in der vorausgehenden Berechnungsroutine (K-1) errechnet werden.

18. Maschine nach einem der Ansprüche 15 bis 17, dadurch gekennzeichnet, daß die zukünftigen X-Lage-Soll-Werte (W(K+i)) für eine Berechnungsroutine (K) die X-Lage-Soll-Werte für eine vorgebbare Anzahl nächstfolgender Berechnungsroutinen (K+i) sind.

19. Maschine nach einem der Ansprüche 8 bis 18, dadurch gekennzeichnet, daß die in einer Berechnungsroutine verwendeten zukünftigen vorausberechneten Lage-Ist-Werte (X(K+i)) auf der Basis des in dieser Berechnungsroutine ermittelten X-Lage-Ist-Werts (X(K)) berechnet werden.

20. Maschine nach Anspruch 19, dadurch gekennzeichnet, daß in die Vorausberechnung der zukünftigen X-Lage-Ist-Werte (X(K+i)) in einer bestimmten Berechnungsroutine (K) das Stellsignal (U(K-1)) zum Zeitpunkt ((K-1)△ T) der vorausgegangenen Berechnungsroutine (K-1) eingeht.

21. Maschine nach Anspruch 19 oder 20, dadurch gekennzeichnet, daß die in einer Berechnungsroutine verwendeten zukünftigen vorausberechneten X-Lage-Ist-Werte (X(K+i)) die Lage-Ist-Werte für eine bestimmte Anzahl (M) nachfolgender Berechnungsroutinen (K+i) sind, und daß mit diesen zukünftigen X-Lage-Ist-Werten (X(K+i)) das Stellsignal (U(K)) in dieser Berechnungsroutine ermittelt wird.

22. Maschine nach einem der voranstehenden Ansprüche, dadurch gekennzeichnet, daß die X-Achsen-Steuerung (197) bei der Maschinensteuerung (199) ein Freigabesignal abfragt.

23. Maschine nach Anspruch 22, dadurch gekennzeichnet, daß außerhalb des Zeitbereichs zwischen dem Einlesen der Sensorwerte (Ix, Ic, Iz) zur Berechnung einer der Stellgrößen und der Ausgabe der jeweiligen Stellgröße das Freigabesignal abgefragt wird.

24. Maschine nach Anspruch 22 oder 23, dadurch gekennzeichnet, daß das Freigabesignal für eine Berechnungsroutine (K) in der vorausgehenden Berechnungsroutine (K-1) abgefragt wird.

25. Maschine nach einem der voranstehenden Ansprüche, dadurch gekennzeichnet, daß der X-Achsen-Antrieb (35) einen elektrischen Linearmotor (118) umfaßt.

26. Maschine nach Anspruch 25, dadurch gekennzeichnet, daß der elektrische Linearmotor (118) ein Drehstrom-Asynchron-Linearmotor ist.

27. Maschine nach Anspruch 26, dadurch gekennzeichnet, daß der elektrische Linearmotor (118) durch flußorientierte Stromführung geregelt ist.

28. Maschine nach Anspruch 27, dadurch gekennzeichnet, daß die flußorientierte Stromführung durch einen dem X-Achsen-Antrieb (35) zugeordneten Impulsumrichter (198) gesteuert erfolgt.

29. Maschine nach einem der voranstehenden Ansprüche, dadurch gekennzeichnet, daß der X-Achsen-Antrieb (35) einen hydraulischen Stellzylinder (230) umfaßt.

30. Maschine nach einem Anspruch 29, dadurch gekennzeichnet, daß der hydraulische Stellzylinder (230) durch ein hydraulisches Servoventil (234) angesteuert ist.

Fig. 1

Fig. 2

# Fig. 3

## Fig. 4

EP 0 479 026 A1

Fig. 5

# Fig. 6

Fig. 7

# Fig. 8

Fig. 9

10

216

13

SB 1    SB 2                    SBn

10

Fig. 10

S3

S4    218

S2

S5

13    S1

222

S6    S8

S7

Fig. 11

```
                              ┌─────────┐
                              │  Start  │
                              └─────────┘
┌──────────────────────────────────────────────────────────┐
│ Einlesen der Meßwerte Ix(K), Ic(K) und Iz(K) der X-, C-   │
│ und Z- Achsen                                              │
└──────────────────────────────────────────────────────────┘

  ┌──────────────────────────────────────────────────────────┐
  │ Berechnung der Lage-Ist-Werte X(K), C(K) und Z(K)        │
  │ aufgrund der Meßwerte Ix(K), Ic(K) und Iz(K)             │
  └──────────────────────────────────────────────────────────┘

    ┌──────────────────────────────────────────────────────┐
    │ Berechnen von zukünftigen Lage-Ist-Werten            │
    │       X(K+1)...............X(K+M)                     │
    │                      M                                │
    │ mit    X(K+i)        │      = F(X(K), U(K-1))         │
    │                     i=1                               │
    └──────────────────────────────────────────────────────┘

      ┌────────────────────────────────────────────────────┐
      │ Einlesen der zukünftigen X-Sollwerte              │
      │ W(K+1)....................W(K+M)                   │
      └────────────────────────────────────────────────────┘

    ┌──────────────────────────────────────────────────────┐
    │ Berechnen der Stellkraft U(K) mit                    │
    │                      M                                │
    │ U(K) = U(K-1) +     ∑     di   W(K+i) - X(K+i)       │
    │                    i=1                                │
    └──────────────────────────────────────────────────────┘
```

$$X(K+i) \Big|_{i=1}^{M} = F(X(K),\ U(K-1))$$

$$U(K) = U(K-1) + \sum_{i=1}^{M} di\ \ W(K+i) - X(K+i)$$

```
┌──────────────────────────────────────────────────────────┐
│ Umsetzen der Stellkraft U(K) in Phasenstrom-             │
│ sollwerte Su(K), Sv(K), Sw(K) des Linearmotors           │
└──────────────────────────────────────────────────────────┘

┌──────────────────────────────────────────────────────────┐
│ Ausgeben der Phasenstromsollwerte an den Umrichter       │
└──────────────────────────────────────────────────────────┘

  ┌──────────────────────────────────────────────────────┐
  │ Freigabe der Maschinensteuerung abfragen             │
  └──────────────────────────────────────────────────────┘

    ┌──────────────────────────────────────────────────┐
    │ Berechnen der zukünftigen                        │
    │ C(K+2)............C(K+(M+1))                      │
    │ und der zukünftigen                              │
    │ Z(K+2)............Z(K+(M+1))                      │
    └──────────────────────────────────────────────────┘

  ┌──────────────────────────────────────────────────────────┐
  │ Berechnen der zukünftigen X-Sollwerte                    │
  │ W(K+2)............W(K+(M+1))                              │
  │ durch Interpolation zwischen den Stützstellen            │
  │ (S1.....S8) und den Scheiben (SB1.....SBn)               │
  │ für die Unrundform durch Heranziehen der                 │
  │ berechneten Wertepaare                                   │
  │ C(K+2), Z(K+2)........C(K+(M+1)), Z(K+(M+1))             │
  └──────────────────────────────────────────────────────────┘

                              ┌─────────┐
                              │  Ende   │
                              └─────────┘
```

23

Fig. 12

**Europäisches Patentamt**

# EUROPÄISCHER RECHERCHENBERICHT

Nummer der Anmeldung

EP 91115677.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,A | <u>EP - A2 - 0 201 230</u><br>(THE CROSS COMPANY)<br>* Totality * | 1-4,9, 22,25 | G 05 B 19/18 |
| A | <u>EP - A1 - 0 381 155</u><br>(TOYODA)<br>* Fig. 2,3,10,12 * | 1-4,9, 22,25 | |
| A | <u>EP - A2 - 0 383 328</u><br>(TOYODA)<br>* Totality * | 1-4,9, 22,25 | |
| A | <u>EP - A2 - 0 329 080</u><br>(TOYODA)<br>* Totality * | 1-4,9 | |
| A | <u>EP - A2 - 0 338 541</u><br>(TAKISAWA)<br>* Totality * | 1-4,9 | |

RECHERCHIERTE SACHGEBIETE (Int. Cl.⁵)

G 05 B 19/00
B 23 B  5/00
B 23 Q 15/00

Der vorliegende Recherchenbericht wurde für alle Patentansprüche erstellt.

| Recherchenort | Abschlußdatum der Recherche | Prüfer |
|---|---|---|
| WIEN | 25-10-1991 | FIETZ |